# EUROPEAN PATENT APPLICATION

(11) **EP 1 047 230 A2**
(43) Date of publication of application: **25.10.2000**
(21) Application number: 00500074.0
(22) Date of filing: 19.04.2000
(51) Int. Cl.: H04L 12/56

(54) **Bundle switch for an asynchronous transfer mode network**

(30) Priority: 22.04.1999 ES 9900833
(71) Applicant: Telefonica, S.A., 28013 Madrid (ES)
(72) Inventor: Plaza Tron, Pierre Yves, c/o Telefonica, S.A., 28020 Madrid (ES); Chas Alonso, Pedro Luis, c/o Telefonica, S.A., 28020 Madrid (ES); Merayo Fernandez, Luis Antonio, c/o Telefonica,SA, 28020 Madrid (ES)
(74) Representative: Carpintero Lopez, Francisco

(57) **Abstract**

The bundle switch for an asynchronous transfer mode network is the basic element of an ATM switching matrix, and is meant to switch bundles of 8, 12 or 20 4-bit words, known as micro-cells, organised in frames. It has eight inputs and four outputs so that it to serve as a basic switching elements for eight inputs and eight outputs the inputs of two bundle switching circuits are bypassed. For switching, depending on the header of the micro-cells at input they are routed to a given output. Additionally, it prevents information losses and contention problems for said miro-cells by a selection and queue algorithm at the output of the switching circuit. It is also provided with automatic synchronisation between the data clock and the system clock and error detection.

## Description

### OBJECT OF THE INVENTION

The present invention relates a bundle switch for an Asynchronous Transfer Mode (ATM) network with which the basic element is provided for an ATM communication matrix, meant to switch 8, 12 or 20 4-bit words known as micro-cells organised in frames. For switching, depending on the micro-cell header at input they are routed to a given output. Additionally, it prevents information loss and problems for contention of said micro-cells by a selection algorithm and queues at the output of the circuit object of the invention. It is also provided with automatic synchronisation and error detection.

The present invention is applicable in the field of telecommunications and more specifically in systems which use switching matrices with asynchronous transfer mode.

### BACKGROUND AND SUMMARY OF THE INVENTION

In the present state of the art devices are known which perform said switching function in switching matrices with Asynchronous Transfer Mode networks, with the data received in the format of ATM cells.

The present invention provides the considerable advantage of being capable of switching information received in a different format, not employed in any other circuit, for bundles of 8, 12 or 20 4-bit words known as micro-cells, by means of devices programmable with the aid of a block synchronisation and plesiochrony management algorithm, using FIFO input memories, which allows to solve the possible delays of the input data and their corresponding clocks.

The bundle switch is the basic digital element of a switching matrix in an asynchronous transfer mode network. It is meant to switch micro-cell which are organised in frames. For this purpose, said switch is controlled by a commercial microprocessor of the 68xxx Motorola family, with an asynchronous interface which can communicate with the microprocessor at the frequency required by the latter.

In turn it allows automatic synchronisation and detection of errors, since it uses a periodic structure of 1920-bit frames in which is inserted a synchronism micro-cell including parity information and a synchronism word.

In order to carry out the switching, depending on the micro-cell header at input they are routed to a given output. It is possible to have several micro-cells in one output which want to exit at the same time, so that in order to avoid contention problems and information losses, micro-cell queues and a selection algorithm have been implemented at the bundle switch output.

In the generic architecture of an NxN switching matrix (N inputs and N outputs) the input consists of ATM cells in standard 53 byte format or in 56 byte format, processed and converted to micro-cells by a different device. Thus, the latter can be switched by a matrix of bundle switch integrated circuits. At the output of the switching matrix, micro-cells are again processed to obtain the same type of cells as in the input.

The present invention is a bundle switch with eight inputs and four outputs. With two switching circuits a basic switching element is obtained with a final structure of eight inputs and eight outputs, so that the eight inputs of both circuits are interconnected. The information contained in the header of the micro-cell to be processed determines to which of the eight possible outputs must go the data. Although the information is processed by both switches, only one extracts the data by one output and the other switch generates empty cells, i.e. filler micro-cells without valid information which are not stored in the corresponding global output memory and are therefore lost.

The switch can handle three different micro-cell formats, of 8, 12 or 20 4-bit words whose basic structure consists of a fixed-size header for any format and of the data. The header consists of sixteen bits, of which the first two select the switching mode and indication of empty cell, the third indicates whether it is reserved or not and the fourth if it is prioritary, and the twelve remaining ones are used for encoding the destination.

### BRIEF DESCRIPTION OF THE DRAWINGS

Further characteristics of the present invention will become apparent in view of the description of an example of a preferred embodiment of the invention, for purposes of illustration only and in no way meant to define the limits of the invention, made with reference to the accompanying drawings, in which:

Figure 1 shows the block diagram for the bundle switch.

Figure 2 shows the internal structure of the input blocks of the bundle switch.

Figure 3 shows the internal structure of the output blocks of the bundle switch.

### DESCRIPTION OF A PREFERRED EMBODIMENT

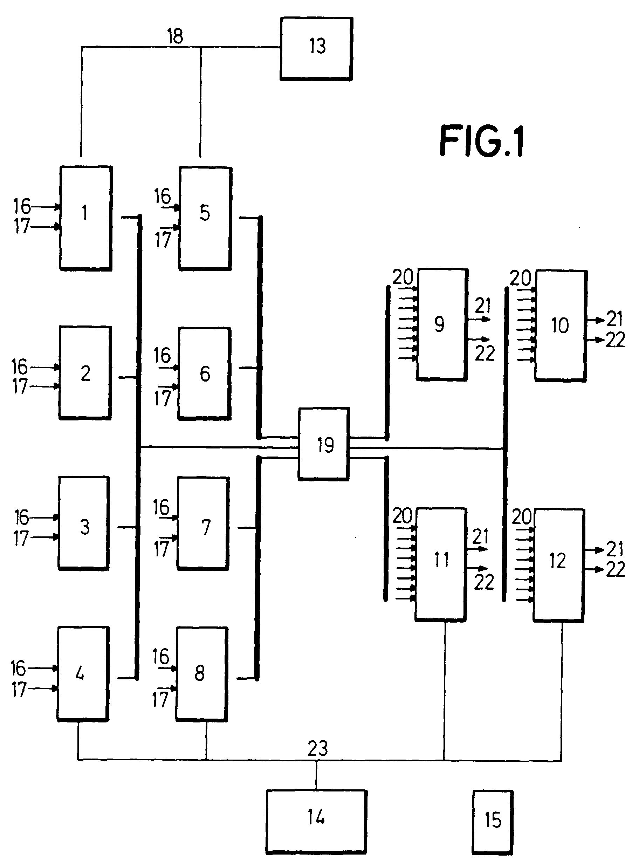

To carry out the description of the preferred embodiment constant reference will be made to the figures of the drawings, in which figure 1 shows the block diagram for the bundle switch, which has associated to each input and output a block whose function is to handle the its corresponding data flow. Input blocks (1-8) handling the eight circuit inputs are identical, as are output blocks (9-12) for the four outputs. It also is provided with three well defined blocks (13-15) which are respectively in charge of internal synchronisation of data, intercommunication functions with the microprocessor and signal control for circuit test in a structural mode.

At each of the eight input blocks arrive, in addition to the initialisation values written by the microprocessor, a signal (23) a four lead data bus (16) and data clock signal (17). IN addition it receives reading timing signals (18) generated in block (13) which generates internal synchronisms and test signals arriving from test control block (15).

Each input block has eight four-lead output data buses routed to the output blocks, forming a point-multipoint matrix (19) (each output of each input block is connected to the input of the output blocks). In each bundle switching circuit there are only four output blocks with a single output each, so that two circuits are required to form an 8x8 switching matrix (eight inputs times eight outputs). There is an input signal (36) (high-low) which allows to identify each bundle switching circuit as the 0 or 1 circuit of such matrix.

At each output block arrive four data buses (20) from the input blocks. These are processed inside it, generating a single output data bus (21) accompanied by its own data clock (22). Additionally, it receives programming signals (23) from the microprocessor and signals from test block (15) for test control.

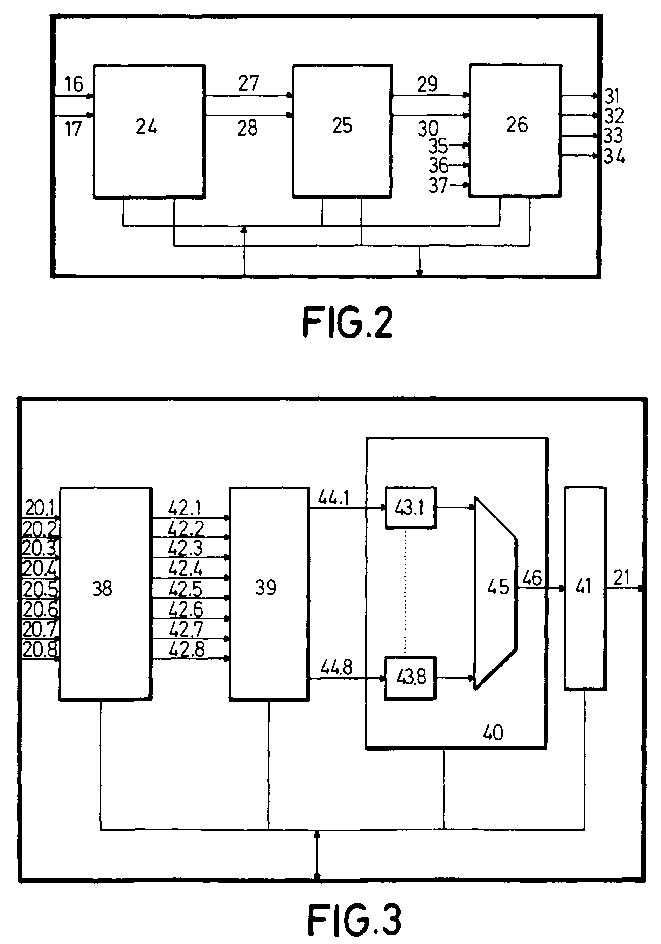

Figure 2 shows the block diagram for each input block of Figure 1, which are in charge of processing circuit input data (16). As the data arrive at input block (24) a synchronisation and error detection algorithm is executed. If reception is correct the data and their clock signal are sent, through connections (27) and (28) respectively, to an FIFO memory (25) where they are stored, whose function is to eliminate the plesiochrony between the data clocks and the internal processing clock. Data read in this manner pass through connection (29) to distribution module (26) which actually implements the switching function, depending on the input micro-cell header.

Input block (24) is the first to process the data flow (micro-cells) arriving from the outside. It detects synchronism and checks the parity of the input signal. In the preferred embodiment it consists of mainly a five-state machine which performs the synchronicity algorithm, a 24-bit comparator to compare the synchronicity word arriving from the microprocessor interface with the encoded word in the data flow, a 2-bit summer to calculate parity, LFSR (Linear Feedback Shift Register) counters, records used to generate pseudo random sequences to count words and micro-cells.

FIFO input memory (25) is mainly meant to solve the plesiochronicity at the input of the bundle switching circuit since, as the clock of the integrated circuit is different from the input clock (17) associated to the corresponding data (phase and frequency up to 1000 parts per million), input data (27) are written in said input memory (27) with their clock (28) and later read from the memory with the system's clock by connections (29) and (30) respectively. In order to avoid such problems as overflow and underflow, there is a read and write control circuit which ensures continuous and error-free data flow. In the preferred embodiment input memory (25) is designed with bistable circuits due to the speed required (about 60 MHz) and sized at 4x30. In this memory empty cells are not written, nor is the frame synchronicity, thus ensuring micro-cell integrity.

Distribution module (26) has a micro-cell input (29), another for the system clock (30) and four outputs (31-34). This module carries out the switching function, processes the micro-cell headers (16 bits) in which is contained the switching mode to be performed at the outlet. This block may handle three types of switching: Encoded type 1, Broadcast and Explicit. The block comprises combinational logic and logs used mainly as pipelines. Firstly, the control information is extracted from the incoming micro-cell, depending on the type of commutation the logic is determined which generates the required enablers for each output , allowing or not the micro-cell to exit through one of the four outputs. If an output is not enabled it generates an empty micro-cell, i.e. without valid information.

The header structure of the micro-cell is shown below, where the order of the bits is from top to bottom and left to right, with TCO being the least significant:

| | | | |
|---|---|---|---|
| TCO | C1 | C5 | C9 |
| TC1 | C2 | C6 | C10 |
| TC2 | C3 | C7 | C11 |
| TC3 | C4 | C8 | C12 |

The three switching modes are given by the following combinations of the micro-cell header bits:

| CONN. (35)TC1 | | TC0 | Switching mode |
|---|---|---|---|
| X | x | 1 | Empty |
| 0 | 0 | 0 | Encoded_1 |
| 0 | 1 | 0 | Encoded_1 |
| 1 | 0 | 0 | Broadcast |
| 1 | 1 | 0 | Explicit |

In the Encoded type 1 switching mode data are routed towards the encoded output in bits C1 to C12 in the following manner, depending on the value of inputs (37) of the distribution block of each switch:

| | CONN. (37)Output address | | |
|---|---|---|---|
| 00 | C3 | C2 | C1 |
| 01 | C7 | C6 | C5 |
| 10 | C11 | C10 | C9 |
| 11 | C12 | C8 | C4 |

The broadcast mode consists of sending towards the four outputs of the block the data being processed with said switching mode.

The explicit mode consists of looking at the state of bits C1, C2, C3 and C4 or C5, C6, C7 and C8 depending on high-low input (36) which selects one of the two bundle switches. If any bit is in "1" state then data are sent by this output. There may be several bits in "1".

High-low input (36) indicates the block to handle bits C1, C2, C3 and C4 or C5, C6, C7 and C8 for output encoding. This allows to transform an eight input by eight output switching element with two integrated circuits as shown in the present invention, in which case inputs are the same for both circuits. They are interconnected to each other, that is, input 1 of one with input 1 of the other.

Figure 3 shows the block diagram of which comprise each output block of figure 1, which process the eight data buses (20.1-20.8) arriving from point-multipoint matrix (19). Using a set of values programmed by the microprocessor during circuit initialisation, the type of traffic to be supported is determined (ordinary and/or prioritary micro-cells) and the acceptance thresholds for these in the FIFO output memory (40) of the circuit. Once this filter (38) is passed the data undergo processing in compacting and alignment block (39) before being stored in output memory (40), which will enter in the data the synchronicity and error detection words required to communicate with other bundle switches.

Acceptance filter (38) and compacting and alignment block (39) control the writing process in output memory (40), ensuring that it never overflows. It also informs interface (14) of the microprocessor at all times of the state it is in: whether ordinary or prioritary micro-cells have been rejected. In addition, depending on the micro-cell format it determines the limit of the number of micro-cells which the output memory can accept. It counts the number of stored micro-cells to determine when micro-cells must be rejected which would overflow the overall memory capacity. A maximum number (threshold) of micro-cells can be programmed after which no more ordinary micro-cells are accepted, sending only prioritary micro-cells to the memory. When a micro-cell is rejected it becomes empty, changing the micro-cell bit which indicates this, the one labelled TC0. it is the most complex block of the bundle switch and in the preferred embodiment it consists of summers, counters and control logic.

Compacting/alignment block (39) receives eight input flows (42.1-42.8) which it compacts first, that is, it reorders the micro-cells received placing in first place all prioritary ones and afterwards ordinary ones. It then aligns them from the output in a rising order, indicated by the address (three bits) arriving from the acceptance filter (38). This is done circularly on its eight outputs, so that if for example in a micro-cell period we have two prioritary micro-cells and one ordinary one in the inputs (therefore only three inputs have valid micro-cells at this time), and in addition the address contained in the phase is 7 (111 in binary) the n the block will exit the prioritary micro-cells through outputs 8 and 1 and the ordinary one on output 2. This block is implemented with a very regular topology, reusing and interconnecting a small number of combinational blocks with certain pipeline stages to reduce the critical path.

FIFO overall output memory (40) is implemented in eight independent FIFO memories (43.1-43.8) of 8x128 bits. In order to write in these the flow of its inputs (44.1-44.8) is parallelised, changing it from 4 to 8 bits and thus allowing to lower the reading and writing frequency (to half the system frequency, namely 30MHz). Empty micro-cells are not written in the memories. Eight micro-cells can be written per micro-cell period: eight data inputs which go directly to the aforementioned eight memories. Instead a single micro-cell is read during this same period as there is an internal reading control block which enables only one of the eight memories for reading in a micro-cell cycle, the rest output empty micro-cells. This block is basically an intelligent circular displacement log, since we have only a limited number of memories. After reinitialising the system awards reading rights to the first memory. At the memory outputs is a micro-cell multiplexor (45)with at most a single valid (non empty) micro-cell in any input, which is outputted through its single output (46), which is that of overall memory (40).

Synchronism and parity generator (41) adds to the data arriving from overall memory (40) the frame synchronism micro-cell (synchronism word plus parity). It basically has a complex multiplexor which depending on the control signals generated by a state machine places at output the data, the frame synchronism word or the frame synchronism, or an additional word to make the frame always 1920 bits long, regardless. It also includes counters to generate parity. The block knows at which time it must inject the synchronism word by means of the frame synchronicity signal generated by the output memory.

This description is not extended in the understanding that any expert in the field would understand its scope and the advantages deriving thereof, as well as to be capable of developing and reducing to practice the object of the same.

However, it must be understood that the invention has been described in accordance with a preferred embodiment for the same, so that it may undergo changes without the operation of the invention being affected whatsoever, which changes may particularly affect the shape, size and/or manufacturing materials.

## Claims

1. Bundle switch for an Asynchronous Transfer Mode (ATM) network, the main function of which as the basic element of an ATM switching matrix is to switch bundles of 8, 12 or 20 4-bit words organised in frames, characterised in that it is structured according to an architecture comprising identical input blocks (1-8) for each of its eight inputs, a matrix (19) which connects each output of the input blocks to the inputs of the four output blocks (9-12), each of which obtains a single output, a block (13) which internally synchronises the data, an interface (14) for communication with a microprocessor and a block (15) to control signals for circuit testing.

2. Bundle switch for an Asynchronous Transfer Mode network as claimed in claim 1, characterised in that it employs a format of bundles, known as micro-cells, of 8, 12 or 20 4-bit words organised in frames of 1920 bits which include synchronism and parity information on the frame, each of which is structured as a header plus the data, and said header, which has a fixed size for any of the aforementioned formats, comprises 16 bits, of which the first two determine the switching mode and indication of empty cell, the third indicates whether it is reserved or not, the fourth whether it is prioritary or not and the remaining twelve are used to encode the micro-cell destination.

3. Bundle switch for an Asynchronous Transfer Mode network as claimed in claim 1, characterised in that each input block (1-8) receives the micro-cells and its corresponding clock, and a synchronisation and error detection algorithm is executed in input block (24), after which, if the micro-cells are not erroneous, the micro-cells are stored in an input FIFO memory (25), which eliminates the plesiochrony between data clock (28) and internal processing clock (13), and the switching function is implemented in distribution module (26).

4. Bundle switch for an Asynchronous Transfer Mode network as claimed in claim 3, characterised in that it can distribute the micro-cells received according to three switching modes, indicated by the bit combinations at the header of said micro-cells, the first of which modes, known as Encoded type 1, routes the data towards the output encoded in the destination address bits included in the header depending on the inputs (37) of distribution module (26); the second mode, Broadcast, sends the data being processed towards the four outputs of distribution module (26), and the Explicit mode checks the sate of the first four bits indicating destination or the four following ones, depending on the high-low input (36), and if any if the bits has a value "1" the bits are sent through such output.

5. Bundle switch for an Asynchronous Transfer Mode network as claimed in claim 1, characterised in that output blocks (9-12) process the eight data buses which pass an acceptance filter (38), which ensures that FIFO output memory (40) does not overflow, since it counts the number of stored micro-cells and does not allow a maximum number (threshold) to be exceeded, and only accepts the type of traffic to be supported, whether ordinary and/or prioritary cells, which has been previously programmed by the microprocessor, converting rejected cells in empty cells; thus, accepted micro-cells pass to compacting/aligning block (39), where they are reordered, prioritary ones before ordinary ones, and sent to output memory (40) which comprises eight FIFO memories, of which only one is enabled to be read, so that through this one is sent the micro-cell by a multiplexor (45) to the to synchronism and parity generator (41), which is in charge of adding the synchronicity and parity of frame micro-cell and/or an additional word, so that the frame is always 1920 bits long, and of sending it through data output (21) of the switch.
